# EUROPEAN PATENT SPECIFICATION

(11) **EP 4 365 080 B1**
(45) Date of publication and mention of the grant of the patent: **24.12.2025**
(21) Application number: 22205260.7
(22) Date of filing: 03.11.2022
(51) Int. Cl.: B64D 11/00, B60Q 3/53, F21K 9/272

(54) **LIGHT MODULE FOR AN ELONGATED INTERIOR AIRCRAFT LIGHT, ELONGATED INTERIOR AIRCRAFT LIGHT, AIRCRAFT, AND METHOD OF INSTALLING AN ELONGATED INTERIOR AIRCRAFT LIGHT IN AN AIRCRAFT**
LICHTMODUL FÜR EIN LÄNGLICHES FLUGZEUGINNENRAUMLICHT, LÄNGLICHE FLUGZEUGINNENRAUMLEUCHTE, FLUGZEUG UND VERFAHREN ZUR INSTALLATION EINES LÄNGLICHEN FLUGZEUGINNENRAUMLICHTS IN EINEM FLUGZEUG
MODULE LUMINEUX POUR UNE LUMIÉRE D'AÉRONEF INTÉRIEURE ALLONGÉE, LUMIÉRE D'AÉRONEF INTÉRIEURE ALLONGÉE, AÉRONEF ET PROCÉDÉ D'INSTALLATION D'UNE LUMIÉRE D'AÉRONEF INTÉRIEURE ALLONGÉE DANS UN AÉRONEF

(43) Date of publication of application: 08.05.2024
(73) Proprietor: Goodrich Lighting Systems GmbH & Co. KG, 59557 Lippstadt (DE)
(72) Inventor: Pawliczek, Carsten, 59556 Lippstadt (DE)
(74) Representative: Schmitt-Nilson Schraud Waibel Wohlfrom Patentanwälte Partnerschaft mbB

(56) References cited:
- US-A1- 2010 008 090
- US-A1- 2017 029 112
- US-A1- 2018 080 635
- US-B2- 8 115 411

## Description

The present invention is in the field of interior aircraft lights, in particular in the field of aircraft passenger cabin lights. The present invention is in particular related to a light module for an elongated interior aircraft light, to an elongated interior aircraft light, to an aircraft comprising such elongated interior aircraft light, and to a method of installing an elongated interior aircraft light in an aircraft.

Passenger aircraft, such as commercial air planes, which comprise a passenger cabin with passenger seats, are usually equipped with aircraft passenger cabin lights for illuminating the passenger cabin.

The aircraft passenger cabin lights commonly include elongated interior aircraft lights, which extend along a longitudinal direction of the passenger cabin, for example along a wall, along a ceiling, along a hand rail, or along a floor of the passenger cabin. Elongated interior aircraft lights may further by employed in other locations within the passenger cabin, such as galleys, wash rooms, etc.

An elongated interior aircraft light may include a plurality of light modules, which are arranged next to each other in a row-type configuration for forming the elongated interior aircraft light. Each of the light modules may be elongated along the longitudinal direction of the elongated interior aircraft light and may comprise a plurality of light sources. The plurality of light sources may be arranged in an array of light sources, extending along the longitudinal direction of the elongated interior aircraft light.

In such configurations, there is a risk that the light, which is emitted by the plurality of light modules onto a target surface, such as onto a cabin wall, results in the formation of unpleasant or disturbing illumination gaps / low illumination regions on the target surface, associated with the interfaces between neighboring / adjacent light modules.

US 20101008090 A1 describes a modular lighting strip comprising: a non-conductive substrate strip comprising an electrical circuit; a plurality of light sources operably connected to the electrical circuit; a plug integrally formed at an end of the substrate strip; and a socket integrally formed at an opposing end of the substrate strip; wherein the plug and socket provide for removable, friction-fit, and electrical interconnection of two or more circuits.

US 2018/080635 A1 describes an end cap for elongate lighting modules having an exposed end surface and a front light emitting surface, comprising: a body wall for abutment against said end surface, and at least one peripheral wall extending sidewise of said body wall and around said body wall, the at least one peripheral wall having at least one discontinuity therein positionable at said front light emitting surface.

US 8 115 411 B2 describes an LED lighting system, comprising: a support structure spanning between a first end and a second end, the support structure being heat conductive and rigid; at least the first end of the support structure carrying electrical connectors for connection to a power source; at least one LED array extending along the support structure; and power control circuitry for the at least one LED array, the power control circuitry being carried by the support structure and being in electrical communication with the electrical connectors, wherein: the power control circuitry is configured to provide current control for the LED array; the at least one LED array is supported by a circuit board and the corresponding power control circuitry is provided on the circuit board; the at least one LED array is divided into sets of LEDs; and the power control circuitry is formed of multiple current controllers, each current controller of the multiple current controllers providing current control for a corresponding set of LEDs in the LED array.

It would be beneficial to provide light modules for elongated interior aircraft lights and elongated interior aircraft lights, equipped with such light modules, which allow for a reduction of the formation of unpleasant or disturbing illumination gaps / low illumination regions at the interfaces between neighboring / adjacent light modules. It would further be beneficial to provide aircraft, equipped with such elongated interior aircraft light(s), and methods for installing such elongated interior aircraft light(s) in an aircraft.

The invention includes a light module for an elongated interior aircraft light in accordance with claim 1, an elongated interior aircraft light in accordance with claim 11, an aircraft in accordance with claim 13, and a method of installing an elongated interior aircraft light in an aircraft in accordance with claim 14. Further embodiments of the invention are given in the dependent claims.

Exemplary embodiments of the invention allow for the provision of an elongated interior aircraft light that is capable of providing a highly even illumination of a target surface. As compared to previous approaches, illumination gaps / low illumination regions, which have been present due to the interfaces between neighboring / adjacent light modules, may be reduced. With the provision of an ancillary forward light output portion, which passes along a side face of the light output boosting lateral end cap, illumination gaps / low illumination regions that are associated with the interfaces between neighboring / adjacent light modules may be provided with additional light. The ancillary forward light output portion may allow for the provision of a highly even illumination of the target surface. With the light output boosting lateral end cap being shaped to mesh with a neighbouring lateral end cap of a neighboring light module, it may be achieved that the ancillary forward light output portion affects the full interface between neighboring / adjacent light modules for a variety of distances between the neighboring light modules, as long as certain maximum distances between the light modules are observed. In scenarios where uncertain distances between light modules are required, e.g. due to production or installation tolerances, misalignments, slight curvatures of the elongated interior aircraft lights, etc., the meshing between the light output boosting lateral end cap and the neighbouring lateral end cap of the neighbouring light module may provide for a flexible way of avoiding or minimizing unpleasant or disturbing illumination gaps / low illumination regions that are associated with the interfaces between neighboring / adjacent light modules.

The light module for an elongated interior aircraft light may be an elongated light module. The array of light sources may be arranged along a longitudinal direction of the light module. The longitudinal direction of the light module may substantially correspond to the longitudinal direction of the elongated interior aircraft light. The array of light sources may be a row-type arrangement of light sources along the longitudinal direction of the light module. The array of light sources may be a single row of light sources or may comprise a plurality of rows of light sources arranged adjacent to each other.

The array of light sources extends between a first lateral and portion of the light module and a second lateral end portion of the light module. The first lateral end portion and the second lateral end portion are the end portions of the elongated light module at the two ends in the longitudinal direction. The first lateral end portion and the second lateral end portion are denoted as the lateral end portions, because they are arranged to the lateral sides of the forward light output portion of the light module, as will be described below. When installed as part of an elongated interior aircraft light, which is in turn installed substantially along a longitudinal direction of an aircraft cabin, the first lateral end portion of the light module and the second lateral end portion of the light module may come to lie as the front end portion and the rear end portion of the light module. In other words, while sensibly being referred to as first and second lateral end portions in the frame of reference of the light module, the first and second lateral end portions may be front and rear end portions in the aircraft frame of reference.

The elongated light transmissive cover is arranged over the array of light sources, wherein the elongated light transmissive cover allows a forward light output portion, emitted by the plurality of light sources towards the elongated light transmissive cover, to pass through. The elongated light transmissive cover may also be referred to as the front cover of the light module. The elongated light transmissive cover is considered the front cover of the light module, because it faces the target surface of the elongated interior aircraft light, when the same is installed within the aircraft. In other words, the elongated light transmissive cover is arranged between the array of light sources and the target surface of the elongated interior aircraft light, when the same is installed within the aircraft. In accordance therewith, the portion of the light that is emitted by the plurality of light sources and that is passed through by the elongated light transmissive cover is considered the forward light output portion. With the array of light sources being an elongated structure, with the light transmissive cover being an elongated structure that is arranged over the array of light sources, and with the elongated light transmissive cover being arranged in a forward direction of the light output, the end portions of this elongated structure, comprising the array of light sources and the elongated light transmissive cover, are reasonably referred to as first and second lateral end portions.

It is stressed again that the elongated light transmissive cover being referred to as the front cover of the light module and the portion of light that is emitted through the elongated light transmissive cover being referred to as the forward light output portion are definitions in the light module frame of reference. The front / forward directions in the light module frame of reference may be different from the forward direction in the aircraft frame of reference. For example, when the elongated interior aircraft light is provided for general cabin illumination, such as in a form of a wash light illuminating the cabin wall of the aircraft cabin, the elongated light transmissive cover may face downward in the aircraft frame of reference and the forward light output portion may be directed downward in the aircraft frame of reference.

At at least one of the first lateral end portion and the second lateral end portion of the light module, a light output boosting lateral end cap is provided. In other words, a single light output boosting lateral end cap may be provided at the first lateral end portion or a single light output boosting lateral end cap may be provided at the second lateral end portion or a respective light output boosting lateral end cap may be provided at each one of the first and second lateral end portions. The features of the light output boosting lateral end cap, as described herein, may be provided at one or both lateral ends of the light module.

The light output boosting lateral end cap is shaped to mesh with a neighbouring lateral end cap of a neighbouring light module. The expression of the lateral end caps meshing means that at least one of the light output boosting lateral end cap and the neighbouring lateral end cap has a protrusion that is shaped to protrude into and potentially engage with a recess of at least the other one of the light output boosting lateral end cap and the neighbouring lateral end cap. The meshing does not necessarily require the light output boosting lateral end cap and the neighbouring lateral end cap to touch. Rather, it means that the light output boosting lateral end cap and the neighbouring lateral end cap are arranged in such a way with respect to each other that the lateral end caps cannot freely slide along each other.

The neighbouring lateral end cap may also be a light output boosting lateral end cap. However, it is also possible that the light output boosting functionality, as will be described below, is provided at the light output boosting lateral end cap of the light module in question and that the neighbouring lateral end cap is provided without such light output boosting functionality.

The light output boosting lateral end cap has a light re-directing element, wherein the light re-directing element is configured to re-direct at least some light of a lateral light output portion, emitted by the plurality of light sources and incident on the light output boosting lateral end cap, to form an ancillary forward light output portion, which passes along a side face of the light output boosting lateral end cap. As compared to the forward light output portion discussed above, the lateral light output portion is not incident on the elongated light transmissive cover, but incident on the light output boosting lateral end cap. In this way, the lateral light output portion may be light that was lost in previous approaches due to being blocked by an opaque lateral end cap. In contrast thereto, the light output boosting lateral end cap makes use of the lateral light output portion and boosts the useful light output of the light module.

The light re-directing element is configured to re-direct at least some light of the lateral light output portion to form the ancillary forward light output portion. In particular, the ancillary forward light output portion is directed to pass along the side face of the light output boosting lateral end cap. In other words, the ancillary forward light output portion is directed to pass along a lateral outside of the light output boosting lateral end cap / is directed to travel outside of the light output boosting lateral end cap. In this way, an additional forward light output portion is provided, which illuminates portions of the target surface where illumination gaps / low illumination regions due to the interfaces between neighbouring light modules were present in previous approaches. The ancillary forward light output portion boosts / reinforces / intensifies / strengthens the illumination of a target surface, with the ancillary forward light output portion targeting those portions of the target surface that were problematic in previous approaches due to the interface between neighbouring light modules. The ancillary forward light output portion encompasses directions that are laterally outside of the projection of the light module onto the target surface.

The light re-directing element comprises a reflective surface for forming the ancillary forward light output portion. The reflective surface may be a surface of specular reflection. It is also possible that the reflective surface is a surface of total internal reflection. With the provision of a reflective surface, a particularly effective re-directing of parts of the lateral light output portion and a provision of a strong ancillary forward light output portion may be achieved.

According to a further embodiment, the light re-directing element is made from a translucent material, with a re-directing of light within the light re-directing element forming the ancillary forward light output portion. Making the light re-directing element from a translucent material may allow for a particularly convenient production of the light output boosting lateral end cap and/or for a high level of design flexibility regarding the geometry of the light re-directing element. As compared to implementations that rely on a surface of specular reflection or on a surface of total internal reflection, it is not a particular surface geometry that provides for the ancillary forward light output portion. Rather, the body of the light re-directing element with its translucent material properties may provide for the ancillary forward light output portion.

The light re-directing element is formed as a protrusion that extends laterally outwards from the side face of the light output boosting lateral end cap. With the light re-directing element being formed as a protrusion, the functions of meshing with a neighbouring lateral end cap and providing the ancillary forward light output portion may be provided in an integrated manner. The provision of a protrusion for implementing the light re-directing element may ensure that the ancillary forward light output portion covers illumination gaps / low illumination regions between adjacent light modules for a variety of distances between adjacent light modules. Accordingly, in addition to providing an integrated solution for achieving the meshing between the light output boosting lateral end cap and the neighbouring lateral end cap and the provision of the ancillary forward light output portion, a high flexibility regarding the spacing between neighbouring light modules may be achieved, without compromising the illumination of the target surface at the interface between light modules in an overly unpleasant or disturbing manner.

According to a further embodiment, the protrusion is a rib-shaped protrusion. The main plane of extension of the rib-shaped protrusion may be substantially parallel to a plane of extension through the array of light sources. In this way, the protrusion may have a front surface that is arranged particularly well for coupling light out of the light re-directing element and towards the target surface.

According to a further embodiment, the protrusion comprises a rear surface that forms the reflective surface for forming the ancillary forward light output portion. In particular, said rear surface may be a surface of total internal reflection. In this way, some light of the lateral light output portion may travel to the reflective surface in an unimpeded manner within the light output boosting lateral end cap and may be effectively re-directed by the total internal reflection surface, before leaving the protrusion at a front surface thereof.

According to a further embodiment, the protrusion has a width in the range of between 4 mm and 8 mm, in particular a width in the range of between 5 mm to 7 mm, more particularly a width of about 6 mm.

According to a further embodiment, the protrusion extends laterally outwards from the side face of the light output boosting lateral end cap by between 1 mm and 5 mm, in particular by between 2 mm and 4 mm, more particularly by about 3 mm.

According to a further embodiment, the protrusion has a height in the range of between 0.5 mm and 5 mm, in particular a height in the range of between 1 mm to 3 mm, more particularly a height of about 2 mm.

It has been found that the given dimensions allow for a particularly good trade-off between achieving an effective meshing of the protrusion with a corresponding recess on the one hand and an effective re-directing of light at the protrusion for forming the ancillary forward light output portion on the other hand. While the given dimensions for the width, the lateral outwards extension, and the height may cooperate particularly well, it is stressed that each of the dimensions, as given above, may be combined with extensions that are outside of the given ranges for the other dimensions. Also, any two of the dimensions of the protrusion may be within the given ranges, with the third dimension being out of the given range.

According to a further embodiment, the light module has a length of between 10 cm and 150 cm, in particular a length of between 20 cm and 100 cm. The length is defined as the dimension in the longitudinal direction of the light module, i.e. the dimension along the array of light sources / along the elongated light transmissive cover. With the given length of the light module, a good trade-off between a high flexibilty for forming the elongated interior aircraft light and a manageable complexity of the elongated interior aircraft light with respect to the number of light modules may be achieved.

According to a further embodiment, the light output boosting lateral end cap comprises a recess for receiving a neighbouring light re-directing element, formed as a protrusion of the neighbouring lateral end cap of the neighbouring light module. In this way, the light output boosting lateral end cap may have a two-fold function in achieving the meshing with respect to a neighbouring lateral end cap. The light output boosting lateral end cap may have both a male coupling element and a female coupling element for achieving the meshing with the neighbouring lateral end cap. In this way, a particularly well-defined relative positioning between the light module in question and the neighbouring light module may be achieved.

According to a further embodiment, the protrusion and the recess of the light output boosting lateral end cap are shaped to mesh with a neighbouring light output boosting lateral end cap that is of the same design / of equal design as the light output boosting lateral end cap. In this way, it may be ensured that light modules of the same design may be used for forming the elongated interior aircraft light in a seamless manner. By ensuring that the light output boosting lateral end caps of the same design are able to mesh with each other, elongated interior aircraft lights may be produced in a highly efficient manner from a single type of light modules. With a single part number for the light module, elongated interior aircraft lights of various lengths may be provided in a highly convenient manner.

According to a further embodiment, an envelope surface of the protrusion and an envelope surface of the recess of the light output boosting lateral end cap have rotational symmetry. Said rotational symmetry may be present with respect to an axis of rotation that runs along the side face of the light output boosting lateral end cap. In particular, the envelope surface of the protrusion and the envelope surface of the recess may have 180° rotational symmetry. With the envelope surface of the protrusion and the envelope surface of the recess having rotational symmetry, the protrusion and the recess may have a highly matching outer geometry. In this way, it may be possible to fully introduce the protrusion into a recess of a neighbouring light output boosting lateral end cap of the same design and to fully receive a protrusion of the neighbouring light output boosting lateral end cap in the recess. A variety of different degrees of meshing, including a full insertion or a partial insertion of the protrusions into the corresponding recesses, may be achieved at the interface between neighbouring light modules.

According to a further embodiment, the light output boosting lateral end cap is at least partly transparent. In particular, the light output boosting lateral end cap may be made of transparent material. The transparent material may be silicone or PMMA (poly(methyl methacrylate)) or any other suitable transparent material. With the light output boosting lateral end cap being at least partly transparent, the light re-directing element may be effectively and conveniently implemented via a surface of total internal reflection. Also, with the light output boosting lateral end cap being at least partly transparent, the material portion over the recess, i.e. the material portion in a forward direction of the recess of the light output boosting lateral end cap, is well suited for passing light through which has been re-directed by a protrusion, implementing the light re-directing element and being inserted into the recess in the assembled configuration of the elongated interior aircraft light. In this way, the light output boosting lateral end cap may allow for a close meshing with a neighbouring lateral end cap, while not interfering or providing only little interference with the ancillary forward light output portion of a neighbouring lateral end cap.

According to a further embodiment, the light output boosting lateral end cap is at least partly translucent. In particular, the light output boosting lateral end cap may be made of translucent material. It is possible that the light re-directing element is made from a translucent material, as discussed above, while the remainder of the light output boosting lateral end cap is made from a transparent material. In this way, said remainder of the light output boosting lateral end cap may pass on light in a particularly efficient and predictable manner. This may apply to the lateral light output portion, before at least some of the lateral light output portion reaches the light re-directing element and forms the ancillary forward light output portion, and to light that travels through the lateral end cap, after having been re-directed at the light re-directing element of the neighboring lateral end cap. It is also possible that the light output boosting lateral end cap is fully made of translucent material. Such a light output boosting lateral end cap may be produced in a less complex manner, while still allowing for an effective provision of the ancillary forward light output portion.

According to a further embodiment, the array of light sources is arranged along a base plate and the elongated light transmissive cover is an elongated dome-shaped light transmissive cover. The elongated dome-shaped light transmissive cover may be mounted directly to the base plate. The array of light sources may thus be arranged in an interior space of the light module between the base plate and the elongated dome-shaped light transmissive cover. At the first lateral end portion and at the second lateral end portion of the elongated dome-shaped light transmissive cover, lateral end caps are provided for closing the interior of the light module. The base plate may be a circuit board, such as a printed circuit board. In this way, the base plate may provide mechanical support for the array of light sources and may provide the electric connections for supplying power to the array of light sources.

According to a further embodiment, the array of light sources is arranged along a base portion of a trough-shaped housing and the elongated light transmissive cover is an elongated light transmissive plate arranged on the trough-shaped housing. In this way, the trough-shaped housing and the elongated light transmissive plate provide an interior space of the light module, where the array of light sources is arranged. At the first lateral end portion and at the second lateral end portion of the trough-shaped housing, lateral end caps are provided for closing the interior of the light module. The base portion of the trough-shaped housing may be a circuit board, in particular a printed circuit board. In this way, the base portion of the trough-shaped housing may provide mechanical support for the array of light sources and may provide the electric connections for supplying power to the array of light sources.

According to a further embodiment, the array of light sources is an array of LEDs. In other words, the plurality of light sources of the light module may be a plurality of LEDs.

According to a further embodiment, the plurality of light sources are a plurality of light sources of the same colour. In an alternative embodiment, the plurality of light sources are a plurality of light sources of different colours.

According to a further embodiment, the light module comprises between 5 and 350 light sources, in particular between 25 and 250 light sources, further in particular between 50 and 200 light sources.

According to a further embodiment, a respective light output boosting lateral end cap is provided at each of the first lateral end portion and the second lateral end portion of the light module. In other words, a first light output boosting lateral end cap may be arranged at the first lateral end portion of the light module and a second light output boosting lateral end cap may be arranged at the second lateral end portion of the light module. All the features, as described herein with respect to a light output boosting lateral end cap, may be implemented in both the first light output boosting lateral end cap and the second light output boosting lateral end cap. The first light output boosting lateral end cap and the second light output boosting lateral end cap may be of the same or substantially the same design. It is also possible that different sets of features are implemented in the first and second light output boosting lateral end caps. With light output boosting lateral end caps being provided at both lateral end portions of the light module, the light module may be particularly well-suited as a building block for an elongated interior aircraft light that provides a highly even illumination at all interfaces between neighbouring light modules.

Exemplary embodiments of the invention further include an elongated interior aircraft light, comprising a plurality of light modules according to any of the embodiments described above. The plurality of light modules are arranged in a row along a longitudinal direction of the elongated exterior aircraft light and, at at least one interface between two of the plurality of light modules, said two of the plurality of light modules mesh with their lateral end caps. For said two of the plurality of light modules, the meshing lateral end caps may both be light output boosting lateral end caps, as described herein. It is also possible that, for one of said two of the plurality of light modules, a light output boosting lateral end cap is provided, while for the other one of said two of the plurality of light modules, a lateral end cap without light output boosting functionality is provided. The additional features, modifications and effects, as described herein with respect to the light module according to exemplary embodiments of the invention, apply to the elongated interior aircraft light in an analogous manner.

According to a further embodiment, the plurality of light modules are arranged in a row along a longitudinal direction of the elongated interior aircraft light and, at each interface between any two of the plurality of light modules, said two of the plurality of light modules mesh with their lateral end caps.

According to a further embodiment, the elongated interior aircraft light comprises between 5 and 100, in particular between 10 and 50, light modules according to any of the exemplary embodiments of the invention described above.

According to a further embodiment, the plurality of light modules are arranged in a row along a longitudinal direction of the elongated interior aircraft light and, at at least one interface between two of the plurality of light modules, a protrusion of a first one of said two of the plurality of light modules, on which the light re-directing element of a light output boosting lateral end cap of the first one of said two of the plurality of light modules is formed, at least partly extends into a recess of a second one of said two of the plurality of light modules and/or a protrusion of the second one of said two of the plurality of light modules, on which the light re-directing element of a light output boosting lateral end cap of the second one of said two of the plurality of light modules is formed, at least partly extends into a recess of the first one of said two of the plurality of light modules.

Exemplary embodiments of the invention further include an aircraft comprising an elongated interior aircraft light, as described in any of the exemplary embodiments of the invention above. The aircraft may also comprise a plurality of elongated interior aircraft lights, as described in any of the exemplary embodiments of the invention above. The aircraft may in particular be an air plane or a rotocraft. The additional features, modifications and effects, as described above with respect to the light module and with respect to the elongated interior aircraft light according to exemplary embodiments of the invention, apply to the aircraft in an analogous manner.

According to a further embodiment, one or more elongated interior aircraft lights in accordance with exemplary embodiments of the invention, as described herein, may extend along a portion of a cabin wall of a passenger cabin of the aircraft.

According to a further embodiment, one or more elongated interior aircraft lights in accordance with exemplary embodiments of the invention, as described herein, may be installed in a washroom of the aircraft and/or in a galley of the aircraft.

Exemplary embodiments of the invention further include a method of installing an elongated interior aircraft light in an aircraft, wherein the method includes arranging a plurality of light modules, as described in any of the exemplary embodiments of the invention above, in a row along a longitudinal extension of the elongated aircraft light, wherein, at at least one interface between two of the plurality of light modules, said two of the plurality of light modules mesh with their lateral end caps. The additional features, modifications and effects, as described above with respect to the light module and with respect to the elongated interior aircraft light according to exemplary embodiments of the invention, apply to the method of installing an elongated interior aircraft light in an analogous manner.

Further exemplary embodiments of the invention are described in the following with respect to the accompanying drawings, wherein:
Figure 1 depicts a schematic side view of an aircraft, in which an elongated interior aircraft light according to an exemplary embodiment of the invention may be employed.
Figure 2 depicts a schematic longitudinal cross-sectional view of a section of a passenger cabin of the aircraft of Figure 1.
Figure 3 depicts a schematic transverse cross-sectional view of a portion of the passenger cabin of the aircraft shown in Figure 1.
Figure 4 depicts a schematic perspective view of a light module according to an exemplary embodiment of the invention, which may be employed in an elongated interior aircraft light according to an exemplary embodiment of the invention.
Figure 5 depicts a first schematic perspective view of a light output boosting lateral end cap of the light module of Figure 4.
Figure 6 depicts a second schematic perspective view of the light output boosting lateral end cap of Figure 5.
Figure 7A depicts a cross-sectional view through the light module of Figure 4, illustrating the light emission of the light module, when the light output boosting lateral end cap is made of transparent material.
Figure 7B depicts a cross-sectional view through the light module of Figure 4, illustrating the light emission of the light module, when the light output boosting lateral end cap is made of translucent material.
Figure 8 depicts the light output boosting lateral end cap of Figure 5 in a top view, when meshing with a neighboring lateral end cap of a neighboring light module.
Figures 9A and 9B depict an exemplary illumination of a target surface, when an elongated interior aircraft light according to an exemplary embodiment of the invention is used, and an exemplary illumination of the target surface, when an elongated interior aircraft light according to a previous approach is used.

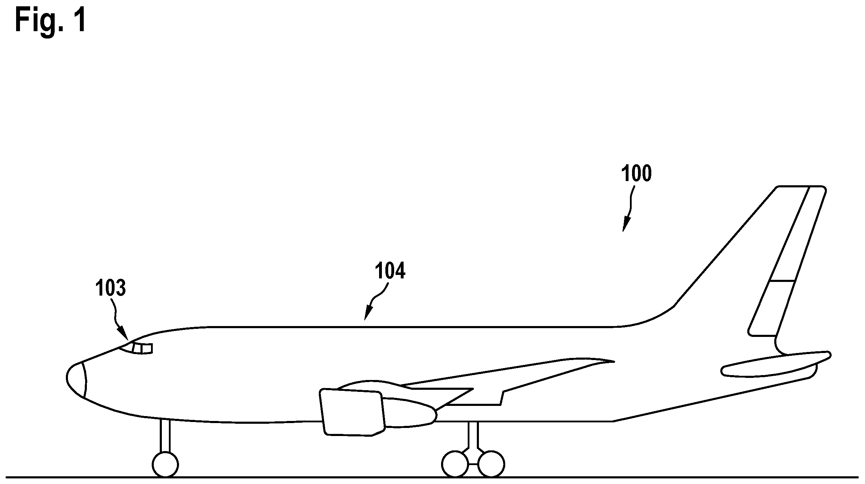

Figure 1 depicts a schematic side view of an aircraft 100, in particular of an air plane, in accordance with an exemplary embodiment of the invention. In the exemplary embodiment shown in Figure 1, the aircraft 100 is a large passenger air plane, comprising a cockpit 103 and a passenger cabin 104. The aircraft 100 may be a commercial passenger air plane, a private air plane, or a military aircraft. It is also possible that the aircraft is a rotorcraft, such as a helicopter.

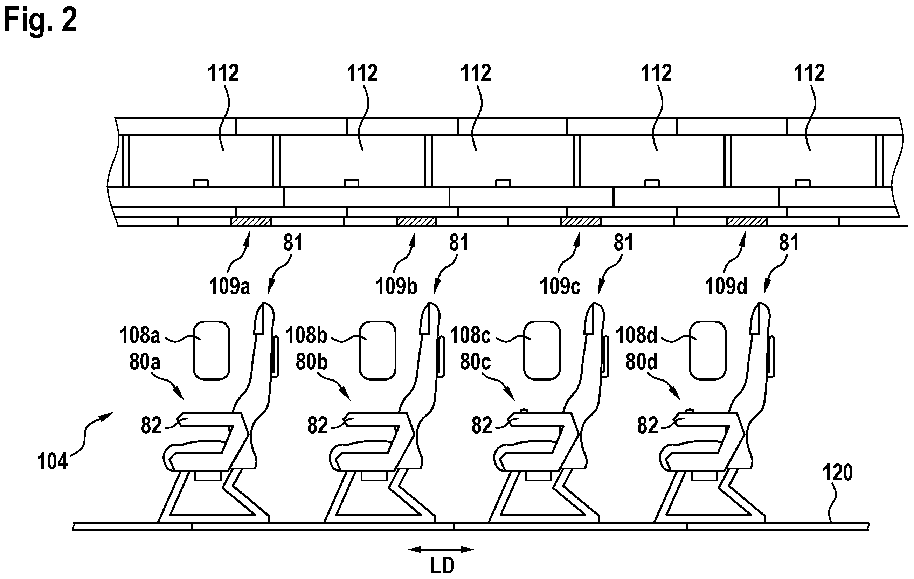

Figure 2 shows a schematic longitudinal cross-sectional view of a section of the passenger cabin 104 of the aircraft 100, which is shown in Figure 1.

Four seats 81, which are also referred to as passenger seats 81, are visible in Figure 2. The passenger seats 81 comprise arm rests 82 and are mounted to a floor 120 of the passenger cabin 104. Each of the depicted passenger seats 81 belongs to a different seat row 80a-80d. The seat rows 80a-80d are spaced apart from each other along the longitudinal direction LD of the passenger cabin 104.

For each of the seat rows 80a-80d, a window 108a-108d is provided, which allows the passengers to view the outside of the aircraft 100. Further, a plurality of overhead baggage compartments 112, which provide storage space for the passengers' baggage, are provided above the passenger seats 81.

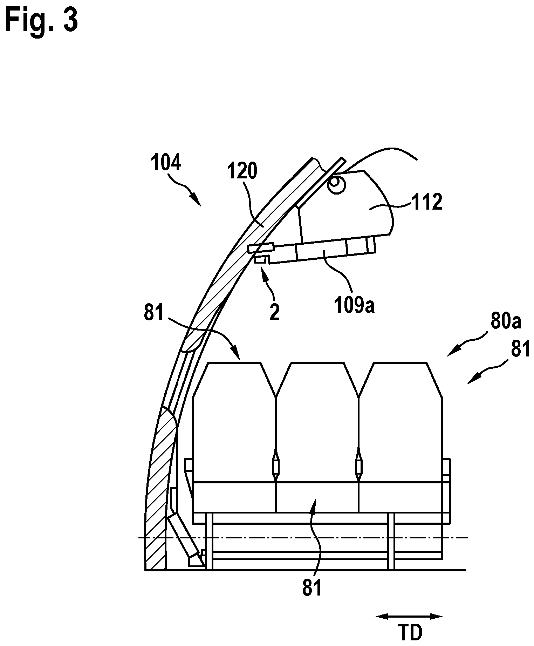

Each seat row 80a-80d may include a plurality of passenger seats 81, for example three passenger seats 81, which are arranged next to each other along a transverse direction TD, which is orthogonal to the longitudinal direction LD. The additional passenger seats, i.e. the middle seats and the window seats, of the seat rows 80a-80d are not visible in Figure 2, as they are arranged behind and therefore hidden by the depicted aisle seats 81. The hidden passenger seats are visible in Figure 3, which will be discussed below.

An aircraft overhead passenger service unit (PSU) 109a-109d is provided above each of the seat rows 80a-80d, respectively.

One or more elongated interior aircraft lights in accordance with exemplary embodiments of the invention may be arranged in the depicted section of the passenger cabin 104. In particular, there may be one or more aircraft passenger cabin lights, which are examples of elongated interior aircraft lights in accordance with exemplary embodiments of the invention and which are not visible in Figure 2. The aircraft passenger cabin lights may extend in the longitudinal direction LD behind the aircraft overhead passenger service units 109a-109d and/or behind and/or above the overhead baggage compartments 112. An example of such an elongated interior aircraft light is shown in Figure 3.

Figure 3 depicts a schematic partial cross-sectional view of the passenger cabin 104. The cross-sectional plane of Figure 3 is oriented in a transverse direction, i.e. orthogonal to the plane of the longitudinal cross-sectional view depicted in Figure 2.

Figure 3 shows a single seat row 80a, which comprises three passenger seats 81, arranged next to each other along the transverse direction TD.

An overhead baggage compartment 112 and a passenger service unit 109a are installed above the seat row 80a.

An elongated interior aircraft light 2 in accordance with an exemplary embodiment of the invention is installed above the passenger seats 81. The exemplary elongated interior aircraft light 2 of Figure 3 is an aircraft passenger cabin light, also referred to as wash light, and is configured for providing general cabin wall illumination.

The elongated interior aircraft light 2 is arranged at or next to a side wall 120 of the passenger cabin 104 and extends along the longitudinal direction LD of the passenger cabin 104, i.e. it extends orthogonal to the drawing plane of Figure 3. The exemplary elongated interior aircraft light 2 may extend along a plurality of seat rows 80a along the longitudinal direction LD or may have an extension that is comparable to a single seat row spacing.

In the following, details of an elongated interior aircraft light 2 according to exemplary embodiments of the invention will be discussed.

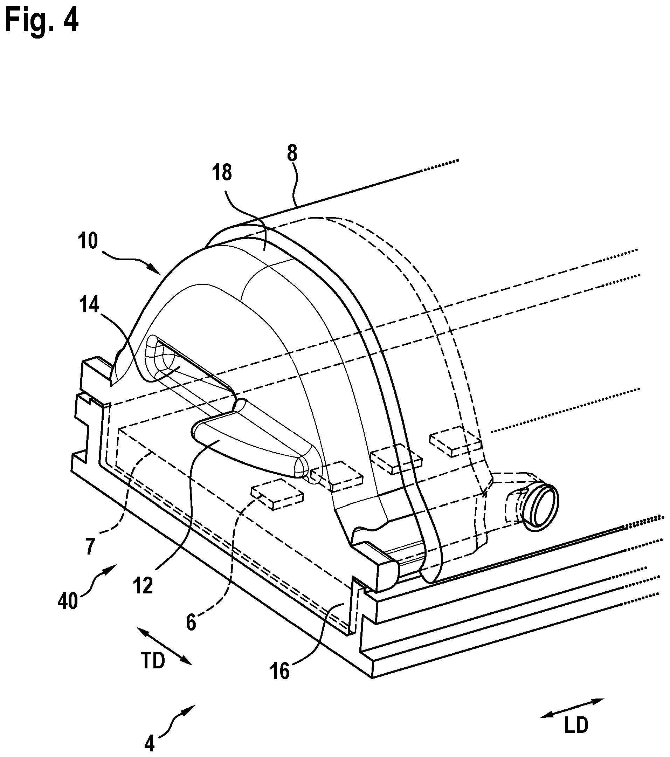

Figure 4 depicts a portion of a light module 4 according to an exemplary embodiment of the invention in a schematic perspective view. In an elongated interior aircraft light according to an exemplary embodiment of the invention, multiple such light modules 4 may be arranged in a row-type configuration. In other words, multiple such light modules 4 may be arranged along a longitudinal extension of an elongated interior aircraft light according to an exemplary embodiment of the invention. The longitudinal direction of the light module 4 is indicated as longitudinal direction LD in Figure 4 and may coincide with the longitudinal direction of the elongated interior aircraft light.

The light module 4 comprises a plurality of light sources 6. In the exemplary embodiment of Figure 4, the light sources 6 are LEDs. The plurality of light sources 6 are arranged as an array of light sources that extends along the longitudinal direction LD of the light module 4. In the exemplary embodiment of Figure 4, the plurality of light sources 6 are arranged as a single-file row along the longitudinal direction LD. The plurality of light sources 6 are arranged on an elongated base plate 7. The base plate 7 is a printed circuit board in the exemplary embodiment of Figure 4.

The light module 4 further comprises an elongated light transmissive cover 8. In the exemplary embodiment of Figure 4, the elongated light transmissive cover 8 is an elongated dome-shaped light transmissive cover. It is mounted to the base plate 7 at respective side portions thereof. The elongated light transmissive cover 8 may be mounted directly to the base plate 7 or may be mounted to the base plate 7 via a suitable fixture. It is also possible that both the base plate 7 and the elongated light transmissive cover 8 are mounted to a suitable mounting structure. The light transmissive cover 8 may be made from any suitable light transmissive material, such as transparent material or translucent material.

The light module 4 as a whole as well as the base plate 7, the array of light sources 6, and the elongated light transmissive cover 8 are elongated structures. In other words, their extensions along the longitudinal direction LD is significantly greater than along a transverse direction TD, which is orthogonal thereto. The large longitudinal extension is indicated via dotted line segments in Figure 4, which illustrate that the array of light sources 6, the base plate 7, and the elongated light transmissive cover 8 extend further towards the right in the drawing plane of Figure 4. Figure 4 is a partial representation of the light module 4.

The light module 4 has a first lateral end portion 40 and a second lateral end portion, which is not shown in the partial representation of Figure 4, as it is located outside of the drawing sheet towards the right. At the first lateral end portion 40, a light output boosting lateral end cap 10 is provided. The light output boosting lateral end cap 10 closes an interior space of the light module 4, as provided between the base plate 7 and the elongated dome-shaped light transmissive cover 8, at the lateral end of the elongated structure of the light module 4.

In the exemplary embodiment of Figure 4, the light output boosting lateral end cap 10 comprises a side face 16 and a dome-shaped cover surface 18. The dome-shaped cover surface 18 is substantially an extension of the elongated light transmissive cover 8. The side face 16 forms, to a large extent, the lateral end of the light module 4. At the side face 16, a protrusion 12 and a recess 14 are provided. The protrusion 12 acts as a light re-directing element, as will be explained below. The recess 14 is shaped to receive a protrusion of a neighbouring lateral end cap.

In the exemplary embodiment of Figure 4, the protrusion 12 has a main plane of extension that is substantially parallel to the base plate 7. Also, the recess 14 has a main plane of extension that is substantially parallel to the base plate 7. In the exemplary embodiment of Figure 4, the protrusion 12 and the recess 14 are arranged side-by-side in the transverse direction of the light module 4. The protrusion 12 and the recess 14 are arranged substantially at the half of the height of the light output boosting lateral end cap 10. In this way, the protrusion 12 and the recess 14 are spaced somewhat from the base plate 7 and, thus, spaced somewhat from the plurality of light sources 6 in the height dimension of the light module 4.

Both the elongated light transmissive cover 8 and the light output boosting lateral end cap 10 may be made from transparent material. The elongated light transmissive cover 8 and the light output boosting lateral end cap 10 may be made from silicone or PMMA or other suitable transparent material. It is also possible that only one of the elongated light transmissive cover 8 and the light output boosting lateral end cap 10 is made from transparent material. It is further possible that one or both of the elongated light transmissive cover 8 and the light output boosting lateral end cap 10 is / are made from translucent material.

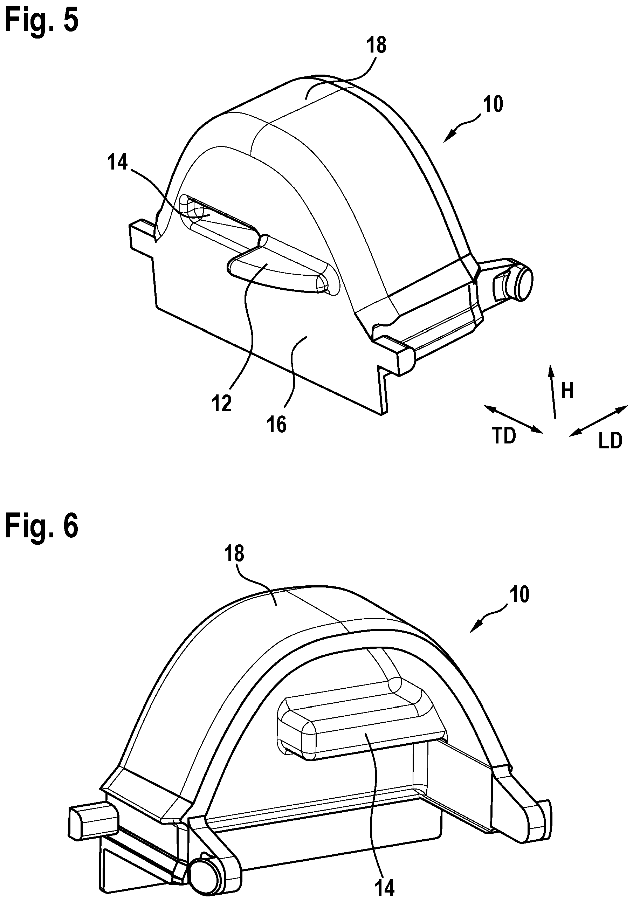

Figure 5 depicts the light output boosting lateral end cap 10 of the light module 4 of Figure 4 in isolation. Figure 5 depicts the light output boosting lateral end cap 10 in a similar perspective view as in Figure 4. Although the light output boosting lateral end cap 10 of Figure 5 is light transmissive, it is depicted as a solid structure solely for ease of illustration of its outer surfaces.

In the exemplary embodiment of Figure 5, an envelope surface of the protrusion 12 is substantially the same as an envelope surface of the recess 14, when disregarding their different positions in the light output boosting lateral end cap 10. Within the framework of the light output boosting lateral end cap 10, the envelope surface of the protrusion 12 is rotationally symmetric with the envelope surface of the recess 14. In particular, the envelope surface of the protrusion 12 can be projected onto the envelope surface of the recess 14 via a 180° rotation around an axis of rotation that is aligned with the height dimension H and that runs along the side face 16 of the light output boosting lateral end cap 10.

Via the rotational symmetry between the protrusion 12 and the recess 14, it is ensured that the light output boosting lateral end cap 10 of Figure 5 can mesh with another light output boosting lateral end cap of the same design to such an extent that the side face 16 can come to lie on the side face of the neighbouring light output boosting lateral end cap. A meshing relationship between the light output boosting lateral end cap 10 of Figure 5 and a neighbouring light output boosting lateral end cap of equal design is possible to various extents. The protrusion 12 and the protrusion of the neighbouring light output boosting lateral end cap may be inserted into the recess of the neighbouring light output boosting lateral end cap and the recess 14, respectively. This insertion may be a partial insertion, having different degrees of insertion, and a full insertion.

In the exemplary embodiment of Figure 5, both the protrusion and the recess 14 have a width of about 6 mm, i.e. an extension of about 6 mm in the transverse direction TD, have a lateral extension from the side face 16 of about 3 mm, i.e. an extension in the longitudinal direction LD of about 3 mm, and have a height of about 2 mm, i.e. an extension in the height dimension H of about 2 mm. The light output boosting lateral end cap 10 may have a total width of between 10 mm and 30 mm, in particular of around 20 mm, a total lateral extension of between 8 mm and 25 mm, in particular of around 15 mm, and a total height of between 8 mm and 25 mm, in particular of around 15 mm.

Figure 6 depicts the light output boosting lateral end cap 10 of the light module 4 of Figure 4 in a second schematic perspective view. The second schematic perspective view depicts the portion of the light output boosting lateral end cap 10 that faces the interior space of the light module 4 between the base plate 7 and the elongated light transmissive cover 8. On the interior side of the light output boosting lateral end cap 10, the recess 14, which is depicted as an indentation in the side face 16 in Figure 5, forms a protrusion into the interior space of the light module 4. Again, solely for ease of illustration of its outer surfaces, the light output boosting lateral end cap 10 is depicted as a solid structure in Figure 6.

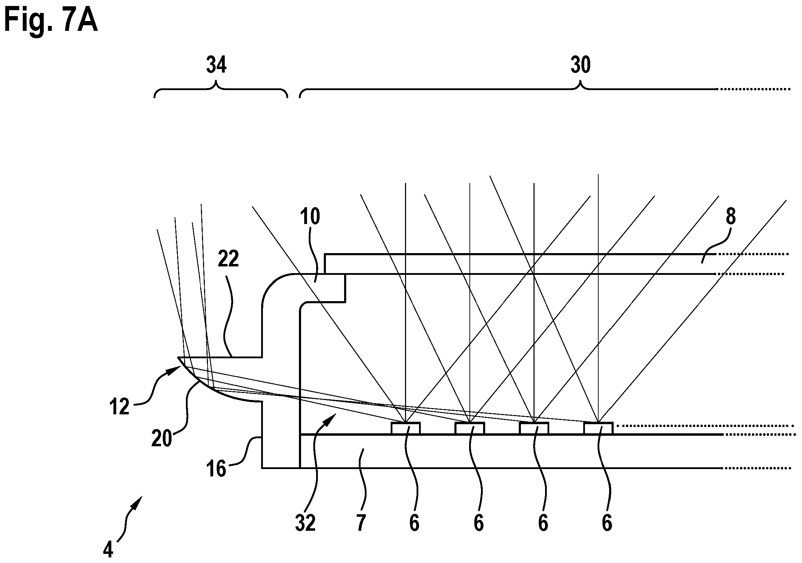

Figure 7A depicts a cross-sectional view through the light module 4 of Figure 4, with the light light output boosting lateral end cap 10 being made of transparent material. The cross-sectional plane of Figure 7A is a longitudinal cross-sectional plane, orthogonal to the transverse direction TD, as indicated in Figure 4, and runs through the protrusion 12. While the plurality of light sources 6 may be arranged behind said cross-sectional plane, they are depicted in Figure 7A for a better illustration of the light emission of the light module 4.

The majority of the light emission from the plurality of light sources 6 exits the light module 4 through the elongated light transmissive cover 8. This portion of the light output is referred to as a forward light output portion 30 herein. The forward light output portion 30 is considered "forward", because it leaves the light module 4 towards a target surface, such as towards the cabin wall 120 depicted in Figure 3, for illumination thereof.

Another portion of the light emission from the plurality of light sources 6 is incident on the light output boosting lateral end cap 10. This portion of the light output is referred to herein as a lateral light output portion 32. Some light of the lateral light output portion 32 enters the light output boosting lateral end cap 10 and reaches the protrusion 12, while some light of the lateral light output portion 32 travels through the wall-like parts of the light output boosting lateral end cap 10, without interacting with the protrusion 12.

As indicated above, the protrusion 12 is an implementation of a light re-directing element. Said light re-directing element is configured to re-direct at least some light of the lateral light output portion 32.

In the exemplary embodiment of Figure 7A, the protrusion 12 has a rear surface 20 and a front surface 22. The rear surface 20 is oriented towards the plane of extension of the base plate 7, whereas the front surface 22 is oriented towards the target surface of the light module 4. In the exemplary embodiment of Figure 7A, the front surface 22 is substantially planar. The rear surface 20 of the protrusion 12 is curved, at least in the depicted longitudinal cross-section and in other longitudinal cross-sections along the width of the protrusion 12. In the exemplary embodiment of Figure 7A, the rear surface 20 is a total internal reflection surface. Some light of the lateral light output portion 32 is incident on said total internal reflection surface and is re-directed to pass along the side face 16 of the light output boosting lateral end cap 10. In this way, an ancillary forward light output portion 34 is provided by the light module 4.

The ancillary forward light output portion 34 strengthens the light output of an elongated interior aircraft light, which has the light module 4 installed, at a region of the light output where an illumination gap / a low illumination region on the target surface would be present due to the interface between the light module 4 and a neighbouring light module. In other words, the ancillary forward light output portion 34 strengthens the light output of the elongated interior aircraft light at a portion of the target surface where the forward light output portion 30 of the light module 4 and a forward light output portion of a neighbouring light module would leave a gap / a low illumination region on the target surface. Due to the optical effect of the protrusion 12, acting as a light re-directing element that is configured for forming the ancillary forward light output portion 34, the light output boosting lateral end cap 10 has the described light output boosting functionality. The ancillary forward light output portion 32 uses light, which was wasted in previous approaches due to the usage of opaque lateral end caps, for filling gaps or evening out low illumination regions on the target surface. While the light output boosting functionality is described for the two-dimensional cross-section of Figure 7A, it is understood that the considerations apply to the three dimensions of the light module 4, as given in Figure 4.

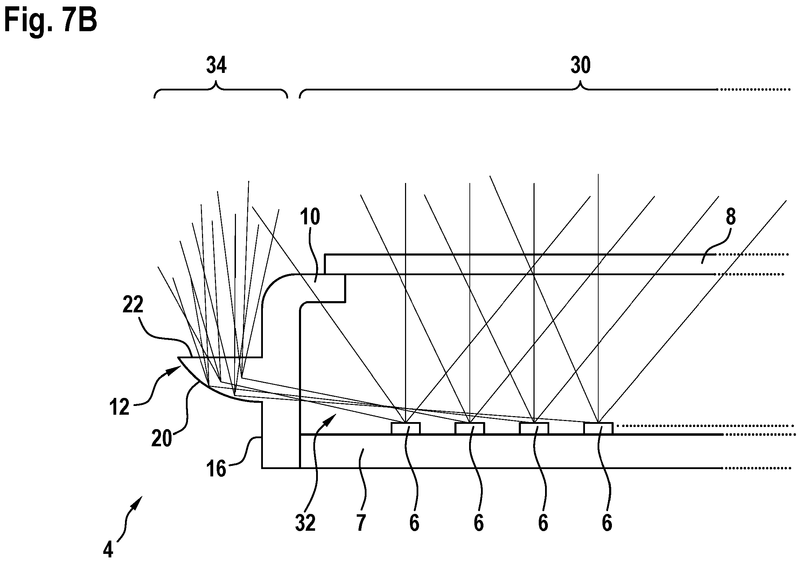

Figure 7B depicts a cross-sectional view through the light module 4 of Figure 4, with the light light output boosting lateral end cap 10 being made of translucent material. The view of Figure 7B is the same as the view of Figure 7A. In particular, Figure 7B depicts a longitudinal cross-sectional view through the light module 4, analogous to Figure 7A.

In the exemplary embodiment of Figure 7B, the light output boosting lateral end cap 10 is made of translucent material. In this way, the protrusion 12 is also made of translucent material. Again, the protrusion 12 is an implementation of a light re-directing element. However, as compared to Figure 7A, the light re-directing mechanism is different. With the protrusion 12 being translucent, at least some light of the lateral light output portion 32 is reflected in different direction within the protrusion 12. When looked at on a high level, the protrusion can be seen to act as a body of diffuse refraction on part of the lateral light output portion 32. This is illustrated in Figure 7B by three exemplary light rays of the lateral light output portion 32, which are split up between different light output directions. Also with this set-up, some of the light of the lateral light output portion 32 is re-directed to pass along the side face 16 of the light output boosting lateral end cap 10 and to form the ancillary forward light output portion 34.

While the geometry of the protrusion 12 is shown to be the same in Figure 7A and Figure 7B, making the protrusion 12 / the light output boosting lateral end cap 10 from translucent material may provide for more design flexibility with respect to the geometry. For example, with the translucent material providing for the re-directing of some light of the lateral light output portion 32, the rear surface 20 may not be used for total internal reflection and may have different geometries, such as a substantially planar shape.

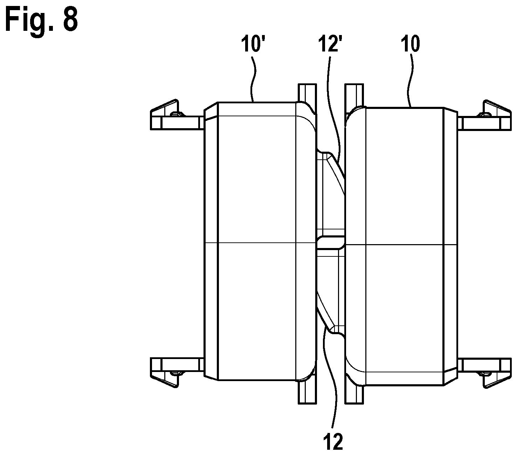

Figure 8 depicts the light output boosting lateral end cap 10 of the light module 4 of Figure 4 in a meshing arrangement with a neighbouring light output boosting lateral end cap 10' of a neighbouring light module. The light output boosting lateral end cap 10 and the neighbouring light output boosting lateral end cap 10' are depicted in a top view, i.e. in a view as seen from the target surface of the elongated interior aircraft light. In the exemplary arrangement of Figure 8, the protrusion 12 of the light output boosting lateral end cap 10 is partially inserted into a recess of the neighbouring light output boosting lateral end cap 10', and the protrusion 12' of the neighbouring light output boosting lateral end cap 10' is partially inserted into the recess of the light output boosting lateral end cap 10. In this arrangement, both protrusions 12, 12' create a respective ancillary forward light output portion and contribute to achieving a highly even illumination of the target surface, even in a region that is associated with the interface between the light output boosting lateral end cap 10 and the neighbouring light output boosting lateral end cap 10'.

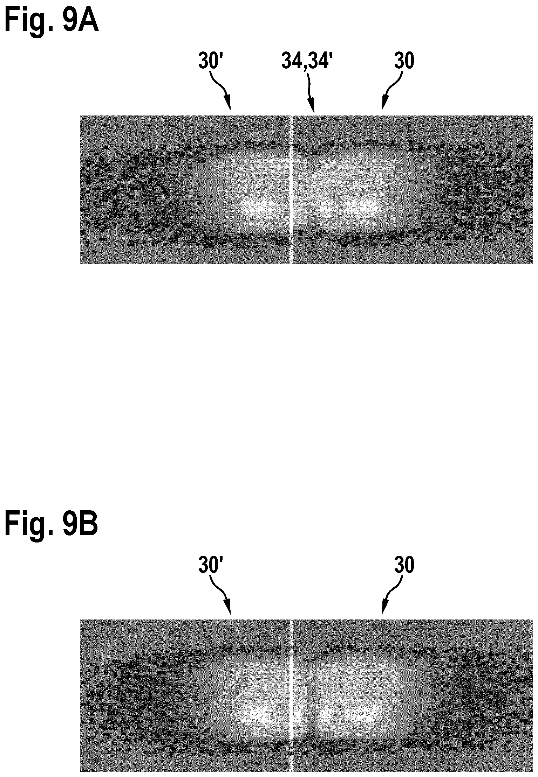

Figures 9A and 9B illustrate the illumination of a target surface, comparing a first scenario, where light output boosting lateral end caps are used at the interface of two neighbouring light modules, with a second scenario, where conventional opaque lateral end caps are used. For the exemplary illustration of Figure 9A, the set-up of the light output boosting lateral end cap 10 and the neighbouring light output boosting lateral end cap 10' of Figure 8 is assumed. In this case, the ancillary forward light output portions 34, 34' of the two light output boosting lateral end caps 10, 10' even out the illumination of the target surface and strengthen the illumination of the target surface between the forward light output portions 30, 30' of the neighboring light modules. As compared to Figure 9B, where a noticeable dip between the forward light output portions 30, 30' is present at the interface of two neighboring light modules with opaque lateral end caps, said artefact in the illumination of the target surface is reduced or even completely mitigated in the illumination of the target surface depicted in Figure 9A.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment disclosed, but that the invention will include all embodiments falling within the scope of the appended claims.

## Claims

1. Light module (4) for an elongated interior aircraft light (2) illuminating a target surface, the light module (4) comprising:
a plurality of light sources (6) arranged along a base plate (7) or along a base portion of a trough-shaped housing, forming an array of light sources (6) that extends between a first lateral end portion (40) of the light module (4) and a second lateral end portion of the light module (4); and
an elongated light transmissive cover (8) that is arranged over the array of light sources (6) and configured to face the target surface of the elongated interior aircraft light, wherein the elongated light transmissive cover (8) allows a forward light output portion (30), emitted by the plurality of light sources (6) towards the elongated light transmissive cover (8), to pass through;
wherein, at at least one of the first lateral end portion (40) and the second lateral end portion, a light output boosting lateral end cap (10) is provided, wherein the light output boosting lateral end cap (10)
- is shaped to mesh, in use, with a neighboring lateral end cap (10') of a neighboring light module,
**characterized in that** the light output boosting lateral end cap (10)
- has a light re-directing element (12), wherein the light re-directing element (12) is configured to re-direct at least some light of a lateral light output portion (32), emitted by the plurality of light sources (6) and incident on the light output boosting lateral end cap (10), to form an ancillary forward light output portion (34), which passes along a side face (16) of the light output boosting lateral end cap (10) and illuminates the target surface,
wherein the light re-directing element (12) comprises a reflective surface (20) for forming the ancillary forward light output portion (34), or
wherein the light re-directing element (12) is made from a translucent material, with a re-directing of light within the light re-directing element (12) forming the ancillary forward light output portion (34);
and
wherein the light re-directing element (12) is formed as a protrusion (12), extending laterally outwards from the side face (16) of the light output boosting lateral end cap (10), wherein the protrusion (12) has a rear surface (20) and a front surface (22), wherein the rear surface (20) is oriented towards a plane of extension of the base plate (7) or the base portion, and wherein the front surface (22) is oriented towards the target surface.

2. Light module (4) according to claim 1,
wherein the light re-directing element (12) comprises said reflective surface (20) for forming the ancillary forward light output portion (34), wherein the reflective surface (20) is a specular reflection surface or a total internal reflection surface.

3. Light module according to claim 1 or 2, wherein the protrusion (12) is a rib-shaped protrusion.

4. Light module (4) according to any of the preceding claims,
wherein the protrusion (12) has a width in the range of between 4 mm and 8 mm, in particular a width in the range of between 5 mm to 7 mm, more particularly a width of about 6 mm;
and/or
wherein the protrusion (12) extends laterally outwards from the side face (16) of the light output boosting lateral end cap (10) by between 1 mm and 5 mm, in particular by between 2 mm and 4 mm, more particularly by about 3 mm;
and/or
wherein the protrusion (12) has a height in the range of between 0.5 mm and 5 mm, in particular a height in the range of between 1 mm to 3 mm, more particularly a height of about 2 mm.

5. Light module (4) according to any of the preceding claims, wherein the light output boosting lateral end cap (10) comprises a recess (14) for receiving a neighboring light re-directing element (12'), formed as a protrusion (12') of the neighboring lateral end cap (10') of the neighboring light module.

6. Light module (4) according to claim 5, wherein the protrusion (12) and the recess (14) of the light output boosting lateral end cap (10) are shaped to mesh with a neighboring light output boosting lateral end cap (10') that is of the same design as the light output boosting lateral end cap (10).

7. Light module (4) according to claim 5 or 6, wherein an envelope surface of the protrusion (12) and an envelope surface of the recess (14) of the light output boosting lateral end cap (10) have rotational symmetry, in particular 180° rotational symmetry.

8. Light module (4) according to any of the preceding claims,
wherein the light output boosting lateral end cap (10) is at least partly transparent, in particular made of transparent material;
or
wherein the light output boosting lateral end cap (10) is at least partly translucent, in particular made of translucent material.

9. Light module (4) according to any of the preceding claims,
wherein when the array of light sources (6) is arranged along the base plate (7), the elongated light transmissive cover (8) is an elongated dome-shaped light transmissive cover;
or
wherein when the array of light sources (6) is arranged along the base portion of the trough-shaped housing, the elongated light transmissive cover is an elongated light transmissive plate arranged on the trough-shaped housing.

10. Light module (4) according to any of the preceding claims, wherein, at each of the first lateral end portion (40) and the second lateral end portion, a respective light output boosting lateral end cap (10) is provided.

11. Elongated interior aircraft light (2), comprising a plurality of light modules (4) according to any of the preceding claims,
wherein the plurality of light modules (4) are arranged in a row along a longitudinal extension of the elongated interior aircraft light (2), and
wherein, at at least one interface between two of the plurality of light modules (4), said two of the plurality of light modules (4) mesh with their lateral end caps.

12. Elongated interior aircraft light (2) according to claim 11, wherein, at at least one interface between two of the plurality of light modules (4), a protrusion (12) of a first one of said two of the plurality of light modules, on which the light re-directing element of a light output boosting lateral end cap (10) of the first one of said two of the plurality of light modules is formed, at least partly extends into a recess of a second one of said two of the plurality of light modules and/or wherein a protrusion (12') of the second one of said two of the plurality of light modules, on which the light re-directing element of a light output boosting lateral end cap (10') of the second one of said two of the plurality of light modules is formed, at least partly extends into a recess of the first one of said two of the plurality of light modules.

13. Aircraft (100), such as an air plane or a rotorcraft, comprising an elongated interior aircraft light (2) according to claim 11 or 12,
wherein the elongated interior aircraft light (2) in particular extends along a portion of a cabin wall (120) of a passenger cabin (104) of the aircraft (100);
and/or
wherein the elongated interior aircraft light is in particular installed in a wash room and/or in a galley of the aircraft.

14. Method of installing an elongated interior aircraft light (2) in an aircraft (100), wherein the method includes:
arranging a plurality of light modules (4) according to any of claims 1 to 10 in a row along a longitudinal extension of the elongated interior aircraft light (2), wherein, at at least one interface between two of the plurality of light modules, said two of the plurality of light modules mesh with their lateral end caps.

## Patentansprüche

1. Leuchtenmodul (4) für eine längliche Luftfahrzeuginnenraumleuchte (2), die eine Zieloberfläche beleuchtet, wobei das Leuchtenmodul (4) Folgendes umfasst:
eine Mehrzahl von Lichtquellen (6), die entlang einer Basisplatte (7) oder entlang eines Basisbereichs eines wannenförmigen Gehäuses angeordnet sind und ein Array von Lichtquellen (6) bilden, das sich zwischen einem ersten seitlichen Endbereich (40) des Leuchtenmoduls (4) und einem zweiten seitlichen Endbereich des Leuchtenmoduls (4) erstreckt; und
eine längliche lichtdurchlässige Abdeckung (8), die über dem Array von Lichtquellen (6) angeordnet ist und so konfiguriert ist, dass sie der Zieloberfläche der länglichen Luftfahrzeuginnenraumleuchte zugewandt ist, wobei die längliche lichtdurchlässige Abdeckung (8) es ermöglicht, dass ein nach vorne gerichteter Lichtausgabeanteil (30), der von der Mehrzahl von Lichtquellen (6) in Richtung der länglichen lichtdurchlässigen Abdeckung (8) emittiert wird, hindurchpassiert;
wobei an mindestens einem von dem ersten seitlichen Endbereich (40) und dem zweiten seitlichen Endbereich eine seitliche Lichtausgabeverstärkungsendkappe (10) bereitgestellt ist, wobei die seitliche Lichtausgabeverstärkungsendkappe (10)
so geformt ist, dass sie während der Verwendung mit einer benachbarten seitlichen Endkappe (10') eines benachbarten Leuchtenmoduls ineinandergreift,
**dadurch gekennzeichnet, dass** die seitliche Lichtausgabeverstärkungsendkappe (10)
ein Lichtumlenkelement (12) aufweist, wobei das Lichtumlenkelement (12) so konfiguriert ist, dass es mindestens einiges an Licht eines seitlichen Lichtausgabeanteils (32), das von der Mehrzahl von Lichtquellen (6) emittiert wird und auf die seitliche Lichtausgabeverstärkungsendkappe (10) auftrifft, umlenkt, um einen zusätzlichen nach vorne gerichteten Lichtausgabeanteil (34) zu bilden, der entlang einer Seitenfläche (16) der seitlichen Lichtausgabeverstärkungsendkappe (10) passiert und die Zieloberfläche beleuchtet,
wobei das Lichtumlenkelement (12) eine reflektierende Oberfläche (20) zum Bilden des zusätzlichen nach vorne gerichteten Lichtausgabeanteils (34) umfasst oder
wobei das Lichtumlenkelement (12) aus einem transluzenten Material hergestellt ist, wobei ein Umlenken von Licht innerhalb des Lichtumlenkelements (12) den zusätzlichen nach vorne gerichteten Lichtausgabeanteil (34) bildet;
und
wobei das Lichtumlenkelement (12) als ein Vorsprung (12) gebildet ist, der sich seitlich von der Seitenfläche (16) der seitlichen Lichtausgabeverstärkungsendkappe (10) nach außen erstreckt, wobei der Vorsprung (12) eine hintere Oberfläche (20) und eine vordere Oberfläche (22) aufweist, wobei die hintere Oberfläche (20) in Richtung einer Erstreckungsebene der Basisplatte (7) oder des Basisbereichs ausgerichtet ist und wobei die vordere Oberfläche (22) in Richtung der Zielfläche ausgerichtet ist.

2. Leuchtenmodul (4) nach Anspruch 1,
wobei das Lichtumlenkelement (12) die reflektierende Oberfläche (20) zum Bilden des zusätzlichen nach vorne gerichteten Lichtausgabeanteils (34) umfasst, wobei die reflektierende Oberfläche (20) eine spiegelnde Reflexionsoberfläche oder eine Oberfläche totaler interner Reflexion ist.

3. Leuchtenmodul nach Anspruch 1 oder 2, wobei der Vorsprung (12) ein rippenförmiger Vorsprung ist.

4. Leuchtenmodul (4) nach einem der vorhergehenden Ansprüche,
wobei der Vorsprung (12) eine Breite in dem Bereich zwischen 4 mm und 8 mm, insbesondere eine Breite in dem Bereich zwischen 5 mm bis 7 mm, weiter insbesondere eine Breite von etwa 6 mm, aufweist;
und/oder
wobei sich der Vorsprung (12) seitlich von der Seitenfläche (16) der seitlichen Lichtausgabeverstärkungsendkappe (10) um zwischen 1 mm und 5 mm, insbesondere um zwischen 2 mm und 4 mm, weiter insbesondere um etwa 3 mm, nach außen erstreckt; und/oder
wobei der Vorsprung (12) eine Höhe in dem Bereich zwischen 0,5 mm und 5 mm, insbesondere eine Höhe in dem Bereich zwischen 1 mm bis 3 mm, weiter insbesondere eine Höhe von etwa 2 mm, aufweist.

5. Leuchtenmodul (4) nach einem der vorhergehenden Ansprüche, wobei die seitliche Lichtausgabeverstärkungsendkappe (10) eine Aussparung (14) zum Aufnehmen eines benachbarten Lichtumlenkelements (12') umfasst, das als ein Vorsprung (12') der benachbarten seitlichen Endkappe (10') des benachbarten Leuchtenmoduls gebildet ist.

6. Leuchtenmodul (4) nach Anspruch 5, wobei der Vorsprung (12) und die Aussparung (14) der seitlichen Lichtausgabeverstärkungsendkappe (10) so geformt sind, dass sie mit einer benachbarten seitlichen Lichtausgabeverstärkungsendkappe (10') ineinandergreifen, die von der gleichen Ausgestaltung wie die seitliche Lichtausgabeverstärkungsendkappe (10) ist.

7. Leuchtenmodul (4) nach Anspruch 5 oder 6, wobei eine umhüllende Oberfläche des Vorsprungs (12) und eine umhüllende Oberfläche der Aussparung (14) der seitlichen Lichtausgabeverstärkungsendkappe (10) eine Rotationssymmetrie, insbesondere eine 180°-Rotationssymmetrie, aufweisen.

8. Leuchtenmodul (4) nach einem der vorhergehenden Ansprüche,
wobei die seitliche Lichtausgabeverstärkungsendkappe (10) mindestens teilweise transparent ist, insbesondere aus transparentem Material hergestellt ist;
oder
wobei die seitliche Lichtausgabeverstärkungsendkappe (10) mindestens teilweise transluzent ist, insbesondere aus transluzentem Material hergestellt ist.

9. Leuchtenmodul (4) nach einem der vorhergehenden Ansprüche,
wobei, wenn das Array von Lichtquellen (6) entlang der Basisplatte (7) angeordnet ist, die längliche lichtdurchlässige Abdeckung (8) eine längliche kuppelförmige lichtdurchlässige Abdeckung ist;
oder
wobei, wenn das Array von Lichtquellen (6) entlang des Basisbereichs des wannenförmigen Gehäuses angeordnet ist, die längliche lichtdurchlässige Abdeckung eine längliche lichtdurchlässige Platte ist, die auf dem wannenförmigen Gehäuse angeordnet ist.

10. Leuchtenmodul (4) nach einem der vorhergehenden Ansprüche, wobei an dem ersten seitlichen Endbereich (40) und dem zweiten seitlichen Endbereich jeweils eine seitliche Lichtausgabeverstärkungsendkappe (10) bereitgestellt ist.

11. Längliche Luftfahrzeuginnenraumleuchte (2), umfassend eine Mehrzahl von Leuchtenmodulen (4) nach einem der vorhergehenden Ansprüche,
wobei die Mehrzahl von Leuchtenmodulen (4) in einer Reihe entlang einer Längserstreckung der länglichen Luftfahrzeuginnenraumleuchte (2) angeordnet sind und
wobei an mindestens einer Schnittstelle zwischen zwei der Mehrzahl von Leuchtenmodulen (4) die zwei der Mehrzahl von Leuchtenmodulen (4) mit ihren seitlichen Endkappen ineinandergreifen.

12. Längliche Luftfahrzeuginnenraumleuchte (2) nach Anspruch 11, wobei sich an mindestens einer Schnittstelle zwischen zwei der Mehrzahl von Leuchtenmodulen (4) ein Vorsprung (12) eines ersten der zwei der Mehrzahl von Leuchtenmodulen, an dem das Lichtumlenkelement einer seitlichen Lichtausgabeverstärkungsendkappe (10) des ersten der zwei der Mehrzahl von Leuchtenmodulen gebildet ist, mindestens teilweise in eine Aussparung eines zweiten der zwei der Mehrzahl von Leuchtenmodulen erstreckt und/oder wobei sich ein Vorsprung (12') des zweiten der zwei der Mehrzahl von Leuchtenmodulen, an dem das Lichtumlenkelement einer seitlichen Lichtausgabeverstärkungsendkappe (10') des zweiten der zwei der Mehrzahl von Leuchtenmodulen gebildet ist, mindestens teilweise in eine Aussparung des ersten der zwei der Mehrzahl von Leuchtenmodulen erstreckt.

13. Luftfahrzeug (100), wie etwa ein Starrflügelflugzeug oder ein Drehflügelflugzeug, umfassend eine längliche Luftfahrzeuginnenraumleuchte (2) nach Anspruch 11 oder 12,
wobei sich die längliche Luftfahrzeuginnenraumleuchte (2) insbesondere entlang eines Bereichs einer Kabinenwand (120) einer Passagierkabine (104) des Luftfahrzeugs (100) erstreckt; und/oder
wobei die längliche Luftfahrzeuginnenraumleuchte insbesondere in einer Toilette und/oder in einer Bordküche des Luftfahrzeugs installiert ist.

14. Verfahren zum Installieren einer länglichen Luftfahrzeuginnenraumleuchte (2) in einem Luftfahrzeug (100), wobei das Verfahren Folgendes beinhaltet:
Anordnen einer Mehrzahl von Leuchtenmodulen (4) nach einem der Ansprüche 1 bis 10 in einer Reihe entlang einer Längserstreckung der länglichen Luftfahrzeuginnenraumleuchte (2), wobei an mindestens einer Schnittstelle zwischen zwei der Mehrzahl von Leuchtenmodulen die zwei der Mehrzahl von Leuchtenmodulen mit ihren seitlichen Endkappen ineinandergreifen.

## Revendications

1. Module d'éclairage (4) pour un éclairage d'aéronef intérieur allongé (2) illuminant une surface cible, le module d'éclairage (4) comprenant :
une pluralité de sources de lumière (6) agencées le long d'une plaque de base (7) ou le long d'une partie de base d'un boîtier en forme d'auge, formant un réseau de sources de lumière (6) qui se prolonge entre une première partie d'extrémité latérale (40) du module d'éclairage (4) et une seconde partie d'extrémité latérale du module d'éclairage (4) ; et
un couvercle de transmission de lumière allongé (8) qui est agencé sur le réseau de sources de lumière (6) et configuré pour faire face à la surface cible de l'éclairage d'aéronef intérieur allongé, dans lequel le couvercle de transmission de lumière allongé (8) permet à une partie de sortie de lumière vers l'avant (30), émise par la pluralité de sources de lumière (6) vers le couvercle de transmission de lumière allongé (8), de passer à travers ;
dans lequel, au niveau d'au moins l'une de la première partie d'extrémité latérale (40) et de la seconde partie d'extrémité latérale, un capuchon d'extrémité latéral d'amplification de sortie de lumière (10) est prévu, dans lequel le capuchon d'extrémité latéral d'amplification de sortie de lumière (10)
- est mis en forme pour s'engrener, lors de l'utilisation, avec un capuchon d'extrémité latéral voisin (10') d'un module d'éclairage voisin,
**caractérisé en ce que** le capuchon d'extrémité latéral d'amplification de sortie de lumière (10)
- a un élément de redirection de lumière (12), dans lequel l'élément de redirection de lumière (12) est configuré pour rediriger au moins une partie de la lumière d'une partie de sortie de lumière latérale (32), émise par la pluralité de sources de lumière (6) et incidente sur le capuchon d'extrémité latéral d'amplification de sortie de lumière (10), pour former une partie de sortie de lumière vers l'avant auxiliaire (34), qui passe le long d'une face latérale (16) du capuchon d'extrémité latéral d'amplification de sortie de lumière (10) et illumine la surface cible,
dans lequel l'élément de redirection de lumière (12) comprend une surface réfléchissante (20) pour former la partie de sortie de lumière vers l'avant auxiliaire (34), ou
dans lequel l'élément de redirection de lumière (12) est fabriqué à partir d'un matériau translucide, avec une redirection de lumière au sein de l'élément de redirection de lumière (12) formant la partie de sortie de lumière vers l'avant auxiliaire (34) ;
et
dans lequel l'élément de redirection de lumière (12) est formé comme une saillie (12), se prolongeant latéralement vers l'extérieur à partir de la face latérale (16) du capuchon d'extrémité latéral d'amplification de sortie de lumière (10), dans lequel la saillie (12) a une surface arrière (20) et une surface avant (22), dans lequel la surface arrière (20) est orientée vers un plan d'extension de la plaque de base (7) ou de la partie de base, et dans lequel la surface avant (22) est orientée vers la surface cible.

2. Module d'éclairage (4) selon la revendication 1,
dans lequel l'élément de redirection de lumière (12) comprend ladite surface réfléchissante (20) pour former la partie de sortie de lumière vers l'avant auxiliaire (34), dans lequel la surface réfléchissante (20) est une surface de réflexion spéculaire ou une surface de réflexion interne totale.

3. Module d'éclairage selon la revendication 1 ou 2, dans lequel la saillie (12) est une saillie en forme de nervure.

4. Module d'éclairage (4) selon l'une quelconque des revendications précédentes,
dans lequel la saillie (12) a une largeur dans la plage comprise entre 4 mm et 8 mm, en particulier une largeur dans la plage comprise entre 5 mm et 7 mm, plus particulièrement une largeur d'environ 6 mm ;
et/ou
dans lequel la saillie (12) se prolonge latéralement vers l'extérieur à partir de la face latérale (16) du capuchon d'extrémité latéral d'amplification de sortie de lumière (10) d'une distance comprise entre 1 mm et 5 mm, en particulier d'une distance comprise entre 2 mm et 4 mm, plus particulièrement d'environ 3 mm ;
et/ou
dans lequel la saillie (12) a une hauteur dans la plage comprise entre 0,5 mm et 5 mm, en particulier une hauteur dans la plage comprise entre 1 mm et 3 mm, plus particulièrement une hauteur d'environ 2 mm.

5. Module d'éclairage (4) selon l'une quelconque des revendications précédentes, dans lequel le capuchon d'extrémité latéral d'amplification de sortie de lumière (10) comprend un évidement (14) pour recevoir un élément de redirection de lumière voisin (12'), formé comme une saillie (12') du capuchon d'extrémité latéral voisin (10') du module d'éclairage voisin.

6. Module d'éclairage (4) selon la revendication 5, dans lequel la saillie (12) et l'évidement (14) du capuchon d'extrémité latéral d'amplification de sortie de lumière (10) sont formés pour s'engrener avec un capuchon d'extrémité latéral d'amplification de sortie de lumière voisin (10') qui est de la même conception que le capuchon d'extrémité latéral d'amplification de sortie de lumière (10).

7. Module d'éclairage (4) selon la revendication 5 ou 6, dans lequel une surface d'enveloppe de la saillie (12) et une surface d'enveloppe de l'évidement (14) du capuchon d'extrémité latéral d'amplification de sortie de lumière (10) ont une symétrie de rotation, en particulier une symétrie de rotation de 180 °.

8. Module d'éclairage (4) selon l'une quelconque des revendications précédentes,
dans lequel le capuchon d'extrémité latéral d'amplification de sortie de lumière (10) est au moins partiellement transparent, en particulier constitué d'un matériau transparent ;
ou
dans lequel le capuchon d'extrémité latéral d'amplification de sortie de lumière (10) est au moins partiellement translucide, en particulier constitué d'un matériau translucide.

9. Module d'éclairage (4) selon l'une quelconque des revendications précédentes,
dans lequel lorsque le réseau de sources de lumière (6) est agencé le long de la plaque de base (7), le couvercle de transmission de lumière allongé (8) est un couvercle de transmission de lumière en forme de dôme allongé ;
ou
dans lequel lorsque le réseau de sources de lumière (6) est agencé le long de la partie de base du boîtier en forme d'auge, le couvercle de transmission de lumière allongé est une plaque de transmission de lumière allongée agencée sur le boîtier en forme d'auge.

10. Module d'éclairage (4) selon l'une quelconque des revendications précédentes, dans lequel, au niveau de chacune de la première partie d'extrémité latérale (40) et de la seconde partie d'extrémité latérale, un capuchon d'extrémité latéral d'amplification de sortie de lumière (10) respectif est prévu.

11. Éclairage d'aéronef intérieur allongé (2) comprenant une pluralité de modules d'éclairage (4) selon l'une quelconque des revendications précédentes,
dans lequel la pluralité de modules d'éclairage (4) sont agencées dans une rangée le long d'une extension longitudinale de l'éclairage d'aéronef intérieur allongé (2), et
dans lequel, au niveau d'au moins une interface entre deux de la pluralité de modules d'éclairage (4), lesdits deux de la pluralité de modules d'éclairage (4) s'engrènent avec leurs capuchons d'extrémité latéraux.

12. Éclairage d'aéronef intérieur allongé (2) selon la revendication 11, dans lequel, au niveau d'au moins une interface entre deux de la pluralité de modules d'éclairage (4), une saillie (12) d'un premier desdits deux de la pluralité de modules d'éclairages, sur lequel est formé l'élément de redirection de lumière d'un capuchon d'extrémité latéral d'amplification de sortie de lumière (10) du premier desdits deux de la pluralité de modules d'éclairage, se prolonge au moins partiellement dans un évidement d'un second desdits deux de la pluralité de modules d'éclairage et/ou dans lequel une saillie (12') du second desdits deux de la pluralité de modules d'éclairage, sur lequel est formé l'élément de redirection de lumière d'un capuchon d'extrémité latéral d'amplification de sortie de lumière (10') du second desdits deux de la pluralité de modules d'éclairage, se prolonge au moins partiellement dans un évidement du premier desdits deux de la pluralité de modules d'éclairage.

13. Aéronef (100), tel qu'un avion ou un giravion, comprenant un éclairage d'aéronef intérieur allongé (2) selon la revendication 11 ou 12,
dans lequel l'éclairage d'aéronef intérieur allongé (2) se prolonge en particulier le long d'une partie d'une paroi de cabine (120) d'une cabine passagers (104) de l'aéronef (100) ; et/ou
dans lequel l'éclairage d'aéronef intérieur allongé est en particulier installé dans une salle de lavage et/ou dans un office de l'aéronef.

14. Procédé d'installation d'un éclairage d'aéronef intérieur allongé (2) dans un aéronef (100), dans lequel le procédé comporte :
l'agencement d'une pluralité de modules d'éclairage (4) selon l'une quelconque des revendications 1 à 10 en une rangée le long d'une extension longitudinale de l'éclairage d'aéronef intérieur allongé (2), dans lequel, au niveau d'au moins une interface entre deux de la pluralité de modules d'éclairage, lesdits deux de la pluralité de modules d'éclairage s'engrènent avec leurs capuchons d'extrémité latéraux.
